# EUROPEAN PATENT SPECIFICATION

(11) **EP 3 762 821 B1**
(45) Date of publication and mention of the grant of the patent: **05.06.2024**
(21) Application number: 19708123.5
(22) Date of filing: 07.03.2019
(51) Int. Cl.: G06N 3/045, G06N 3/08, G06F 9/451, G06F 9/445, G06F 16/9035

(54) **NEURAL NETWORK SYSTEMS AND METHODS FOR APPLICATION NAVIGATION**
NEURONALE NETZSYSTEME UND VERFAHREN ZUR NAVIGATION IN EINER ANWENDUNG
SYSTÈMES ET PROCÉDÉS DE NAVIGATION DANS DES APPLICATIONS À L'AIDE DE RÉSEAUX NEURONAUX

(30) Priority: 07.03.2018 FR 1851948; 07.03.2018 US 201815914152
(43) Date of publication of application: 13.01.2021
(73) Proprietor: Amadeus S.A.S., 06410 Biot (FR)
(72) Inventor: ROLLAT, Geoffroy, Miami, Florida 33130 (US); DUTTO, Julien, Miami, Florida 33130 (US); KWONG, Kevin, Lynnfield, Massachusetts 01940 (US)
(74) Representative: Samson & Partner Patentanwälte mbB
(86) International application number: PCT/EP2019/055674
(87) International publication number: WO 2019/170800

(56) References cited:
- SAI WU ET AL: "Personal recommendation using deep recurrent neural networks in NetEase", 2016 IEEE 32ND INTERNATIONAL CONFERENCE ON DATA ENGINEERING (ICDE), 1 May 2016 (2016-05-01), pages 1218-1229, XP055556215, DOI: 10.1109/ICDE.2016.7498326 ISBN: 978-1-5090-2020-1
- PAUL COVINGTON ET AL: "Deep Neural Networks for YouTube Recommendations", RECOMMENDER SYSTEMS, ACM, 2 PENN PLAZA, SUITE 701 NEW YORK NY 10121-0701 USA, 7 September 2016 (2016-09-07), pages 191-198, XP058278047, DOI: 10.1145/2959100.2959190 ISBN: 978-1-4503-4035-9
- LI XIANG ET AL: "An Improved Mining Strategy of Preferred Paths in Web Applications Based on RBF Neural Network", 2013 INTERNATIONAL CONFERENCE ON COMPUTER SCIENCES AND APPLICATIONS, IEEE, 14 December 2013 (2013-12-14), pages 300-304, XP032609241, DOI: 10.1109/CSA.2013.76
- DAISUKE KAMISAKA ET AL: "Operation Prediction for Context-Aware User Interfaces of Mobile Phones", APPLICATIONS AND THE INTERNET, 2009. SAINT '09. NINTH ANNUAL INTERNATIONAL SYMPOSIUM ON, 20 July 2009 (2009-07-20), pages 16-22, XP055106610, New York, New York, USA DOI: 10.1109/SAINT.2009.12 ISBN: 978-0-7695-3700-9
- Wikipedia: "Single-page application", Wikipedia, 25 February 2018 (2018-02-25), pages 1-9, XP055556244, Retrieved from the Internet: URL:file:///C:/Users/PB22514/Desktop/Singl e-page%20application%20-%20Wikipedia.pdf [retrieved on 2019-02-13]

## Description

### TECHNICAL FIELD

The present disclosure relates generally using neural networks for application navigation. In particular, this disclosure relates to using multiple neural networks to predict a next page of an application.

### BACKGROUND

An unfamiliar application can be difficult to navigate. A user seeking to perform tasks may not know how to access necessary application interfaces. An untrained user may perform a task in a manner that increases the time, number of steps, or likelihood of error involved in performing the task. Existing methods for guiding users through an application can be inefficient and inaccurate. For example, training materials may reflect how developers believe a user should interaction with an application, which may differ from how skilled users actually interact with the application. And training materials can quickly become outdated as the application is updated or the context in which the application is used changes.

A need therefore exists for a system of application navigation that can reflect how users actually interact with an application, and can continue to provide accurate recommendations when the application is updated or the context in which the application is used changes. According to one pattern of application development, applications (or components of applications) can be constructed from application states that operate on data objects to generate pages displayed to a user. The application states can define the appearance and functionality of pages, while the data objects can store the actual data. As disclosed herein, systems and methods for application navigation can exploit this pattern of application development to provide improved application navigation systems that overcome the deficiencies of existing approaches.

The paper of Sai Wu et. al. (2016) "Personal Recommendation Using Deep Recurrent Neural Networks in NetEase" uses a recurrent neural network combined with a feedforward neural network to predict a sequence of webpages. The recurrent neural network tracks how users browse the website using multiple hidden layers and uses this as input combined with the feedforward neural network which represents the user-item correlations to increase the prediction accuracy.

The paper of Paul Covington et al. (2016) "Deep Neural Networks for YouTube Recommendations" deals with video recommendations based on the user web history on YouTube and new uploads to the platform which are linked using two neural networks, one for candidate generation and for ranking, to display the best possible recommendation. The history containing hundreds of videos is intended to be generally relevant to the user with high precision and uses features of the user e.g., ID of video watches, search query tokens and demographics. The ranking network assigns a score to each video according to a desired objective function using a rich set of features describing the video and user.

Li et al. (2013) "An Improved Mining Strategy of Preferred Paths in Web Applications Based on RBF Neural Network" proposes a calculation method which evaluates the level of user interest in a web page and a mining algorithm of preferred path in the cloud computing environment. The preference degree of a user is predicted by a RBF neural network and uses some key factors such as visit quantity, access time, page bytes, and the nonlinearity relationships among these factors. Afterwards, the new mining algorithm is applied on the preference degree model to use locations of non-preferred URLs to get the preferred path.

The paper "Operation Prediction for Context-Aware User Interfaces of Mobile Phones" by Kamisaka et al. (2009) relates to application navigation on mobile devices and describes that Machine learning based prediction methods are feasible to estimate future operations, and to provide context-aware user interfaces on mobile devices. The collection of real usage data of practical mobile phones from a plurality of users is the input of a machine learning algorithm which predicts the first use of application after each open event of a mobile phone. Especially for infrequently used applications which the conventional algorithms cannot predict, the machine learning algorithm is more accurate than the conventional ordering algorithm.

The Wikipedia entry for single page applications (SPA) describes a web application or web site that interacts with the user by dynamically rewriting the current page rather than loading entire new pages from a server. This avoids interrupting between successive pages. In a single page application, either all necessary code is retrieved with a single page load, or the appropriate resources are dynamically loaded and added to the page as necessary. Interaction with the single page application often involves dynamic communication with the web server behind the scenes.

### SUMMARY

The present invention is defined according to the independent claims. Specific embodiments are defined in the dependent claims.

### BRIEF DESCRIPTION OF THE DRAWINGS

The accompanying drawings illustrate several embodiments and, together with the description, serve to explain the principles disclosed herein. In the drawings:
Fig. 1 depicts a system for application navigation including a client and a server providing an application.
Fig. 2A depicts an exemplary schematic of an application including application states.
Fig. 2B depicts an exemplary schematic illustrating generation of a page by an application state of an application using a data object.
Figs. 3A and 3B depict exemplary user trajectories through pages of an application.
Fig. 4 depicts a prediction element configured to use linked neural networks to predict a next page of an application.
Fig. 5 depicts an exemplary input vector.
Fig. 6 depicts a flowchart illustrating an exemplary method 600 for training a prediction component.
Fig. 7 depicts a flowchart illustrating a method of application navigation using neural networks.
Figs. 8-10 depict exemplary user interfaces for a property management application.
Fig. 11 is a block diagram of an example device with which the systems, methods, and apparatuses of the present invention may be implemented.

### DETAILED DESCRIPTION

Reference will now be made in detail to exemplary embodiments, discussed with regards to the accompanying drawings. In some instances, the same reference numbers will be used throughout the drawings and the following description to refer to the same or like parts. Unless otherwise defined, technical and/or scientific terms have the meaning commonly understood by one of ordinary skill in the art. The disclosed embodiments are described in sufficient detail to enable those skilled in the art to practice the disclosed embodiments. It is to be understood that other embodiments may be utilized and that changes may be made without departing from the scope of the disclosed embodiments. Thus the materials, methods, and examples are illustrative only and are not intended to be necessarily limiting.

A computing system may provide an application to users. This application may include multiple pages. A page can be a user interface displayed to the user including data and graphical elements. The graphical elements can include controls and indicators. As a non-limiting example, a page can be a webpage. As an additional example, a page can be a view (e.g., a representation of information displayed to the user) according to the model-view-controller design pattern or a similar software design pattern (e.g., the model-view-adapter design pattern or the model-view-viewmodel design pattern).These pages may allow a user to read information or enter information or commands. Different pages may enable the reading or entering of different information or commands. The application may enable a user to accomplish tasks by reading and/or entering information or commands using the pages. In some instances, accomplishing a task may require interacting with multiple pages of the application. As a non-limiting example, a user may retrieve information from a database using a first page, interact with the application to generate a second page, and then enter data or commands based on the retrieved information using the second page.

Users may find performing a task using such an application difficult. A user may be unfamiliar with the application and/or the task to be performed. Consequently, they may not know how to navigate the application to the correct pages for performing the task. Alternatively or additionally, a preferred way to perform the task may exist, one that reduces the time, number of steps, or likelihood of error. This preferred way may include visiting a particular set of pages in a particular order. A user unfamiliar with the application and/or the task may not know this preferred way to perform the task. Instead, the user may use another way to perform the task that takes longer, requires more steps, or has an increased likelihood of error.

The envisioned systems and methods can provide recommendations for using an application. For example, the envisioned systems and methods can infer the task a user is attempting to perform and recommend a next page for performing that task. This next page may be a page in a preferred way of performing the task. In some aspects, the envisioned systems and methods can to provide a recommendation by modifying a currently displayed page of the application. For example, the currently displayed page can be modified to include an additional window. This additional window can include one or more controls. Interacting with these controls can cause the application to transition to a recommended page. As an additional example, if interacting with an element of the currently displayed page would cause the application to display the recommended page, then that element can be modified (e.g., by changing the placement, shape, size, or color of the element; or by changing the placement, font, size, emphasis, or color of text associated with the particular element). This modification can direct the user's attention to the element, serving as a recommendation. In this manner, the envisioned systems and methods can recommend actions transitioning the application from the currently displayed page to the recommended page.

Artificial neural networks can be used to generate the recommendation. In some embodiments, the envisioned systems and methods can divide the overall prediction process into multiple subsidiary steps, each performed by one neural network in a chain of linked neural networks. As a non-limiting example, the recommendation process can be divided into two steps. In a first step, a first neural network can recommend a state based on first input data. In a second step, a second neural network can recommend a data object based on the recommended state and second input data. These artificial neural networks can be trained using actual usage data for the application. In some embodiments, the first and second input data can be the same input data.

The envisioned systems and methods improve upon manuals, wizards, tutorials, and other existing recommendation systems. For example, the envisioned systems and methods can provide updated recommendations that track changing usage patterns or changes to the application. Also, recommendations are not limited to situations anticipated by the developers of the application. In contrast, manuals, wizards, tutorials, and other existing recommendation systems are rendered obsolete by changing usage patterns and application updates, and limited to situations anticipated by the developers.

These improvements are enabled, at least in part, by the specific architecture disclosed herein. The universe of potential pages for an application can be extremely large, limiting the applicability of conventional neural networks. But the envisioned systems and methods use linked neural networks to divide the overall prediction problem into the smaller sub-problems. This enables accurate recommendations using artificial neural networks trained with actual usage data.

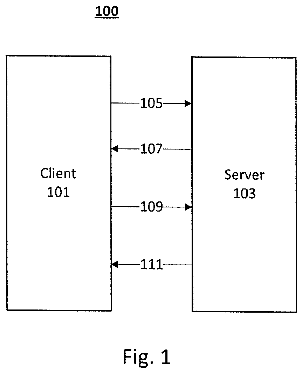

Fig. 1 depicts a system 100 for application navigation including a client and a server providing an application over a network, consistent with disclosed embodiments. Client 101 can be a computing device of a user (e.g., a wearable device, mobile device, laptop, desktop, workstation, terminal, etc.) Client 101 can be configured to run a web browser (e.g., CHROME^{®}, OPERA^{®}, MOZILLA^{®}, INTERNET EXPLORER^{®}, SAFARI^{®}, EDGE^{®}, etc.). Server 103 can be a computing device configured to respond to requests from client 101. The network can be any type of network (including infrastructure) that provides communications, exchanges information, and/or facilitates the exchange of information, such as the Internet, a Local Area Network, or other suitable connection(s). Client 101 can be configured to request a page from server 103 in step 105. In response, server 103 can be configured to provide a one or more files describing the layout and contents of the page in step 107. Client 101 can then generate this page.

Client 101 or server 103 can generate updates to the page based on information exchanged in steps 109 and 111. In some embodiments, client 101 can contact server 103 to request a new page in step 109. For example, a web browser running on client 101 can send a POST request to server 103. Server 103 can be configured to respond to this POST request, in some embodiments, by rendering a new page and sending this new page to client 101 in step 111. Client 101 can then load this new page. In various embodiments, client 101 can dynamically update the page without loading a new page from server 103 (e.g., the application can be a single page application). In such embodiments, the application can be implemented using a web browser JavaScript^{®} framework such as ANGULARJS^{®}, EMBER.JS^{®}, METEOR.JS^{®}, EXTJS^{®}, REACT^{®} or similar frameworks known to one of skill in the art. The web browser running on client 101 can request data and/or instructions in step 109 (e.g., using an AJAX^{®} call). Server 103 can be configured to respond with data and instructions (e.g., as JSON^{®} objects) in step 111. Client 101 can then dynamically update the page using the received data and instructions.

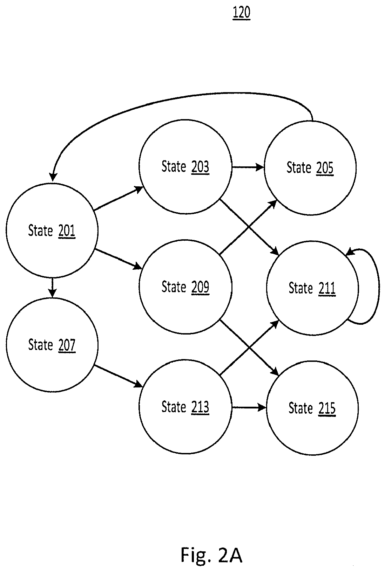

Fig. 2A depicts an exemplary schematic of an application including application states (e.g., state 201 - state 215), consistent with disclosed embodiments. As shown, application states can be linked, such that a user can transition from one application state to another. For example, a user can start application 120 in application state 201, transition to application state 203 (e.g., by interacting with a graphical element in a page generated by application state 201), transition to application state 205 (e.g., through another interaction), and then return to application state 201. In this manner, the linked application states can form one or more graphs. In some aspects, the application states can make up the application (or one or more components of the application).

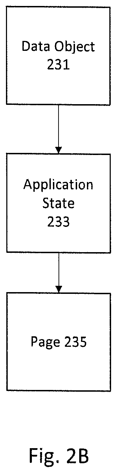

Fig. 2B depicts an exemplary schematic illustrating generation of page 235 by application state 233 of application 120 using data object 231. In some embodiments, application states can define the appearance and functionality of pages. For example, an application state can define one or more page templates including markup language and scripting commands. In some aspects, each application state can have a unique identifier. This identifier can be a text string (e.g., "application/directory/dostuff" or "dostuff_state") or a numeric value. An application state (e.g., application state 233) can take a data object (e.g., data object 231) as an input. In various aspects, the data object can be selected from a predetermined set of data objects. Each data object can have a unique identifier. This identifier can be a text string (e.g., "re: do stuff," or "root/dir/identifier") or a numeric value. The application state can operate on the selected data object to generate the page. As a non-limiting example, an application state defining a page template can be configured to apply the data object to the page template, executing the scripting commands using one or more values of the data object and presenting the results according to the markup language.

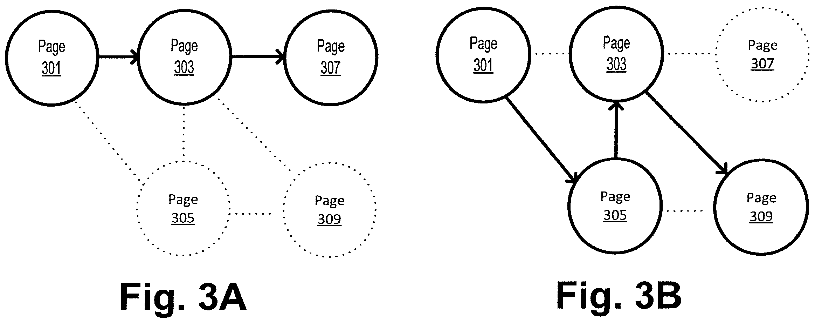

Figs. 3A and 3B depict exemplary user trajectories through pages of application 120, consistent with disclosed embodiments. As previously disclosed, client 101 can be configured to generate such pages using application states and data objects. For example, client 101 can be configured to display page 501 when a first application state of application 120 operates on a first data object. In this example, client 101 can be configured to display page 505 when a second application state of application 120 operates on the first data object. And client 101 can be configured to display page 503 when the first application state of application 120 operates on a second data object. As pages can depend on both application state and data object, the graph of application states and the graph of pages can differ.

Users can transition between pages when interacting with application 120. For example, as indicated in Figs. 3A and 3B, a user can transition from page 301 to either page 303 or page 305. Pages can include one or more graphical elements enabling the user to transition to another page. For example, a page could include a dropdown menu, address tags, an address bar, or other suitable controls known to one of skill in the art. As users performing different tasks may interact differently with application 120, system 100 can use transitions between pages to predict the next page for a user. For example, as shown in Fig. 3A, when page 303 is the current page and page 301 was the previous page, system 100 can estimate that the next page should be page 307. In contrast, as shown in Fig. 3B, when page 303 is the current page and page 305 was the previous page, system 100 can estimate that the next page should be page 309.

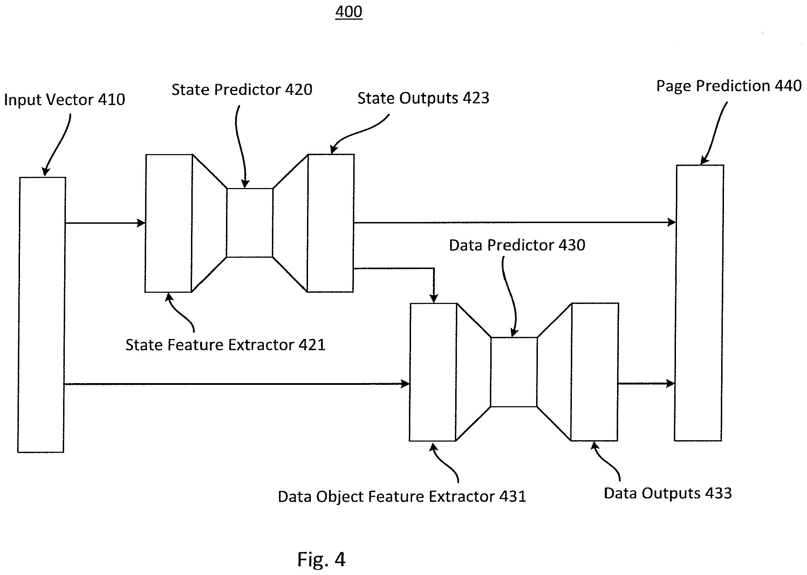

Fig. 4 depicts a prediction component 400 configured to use linked neural networks to predict a next page of an application, consistent with disclosed embodiments. In some aspects, prediction component 400 can be configured to divide prediction of the next page into two sub-problems. Prediction component 400 can be configured to use state predictor 420 to predict one or more next application states based on a first input vector. Prediction component 400 can be configured to use data predictor 430 to predict one or more next data objects operated on by the one or more next application states based on the one or more next application states and a second input vector. In some embodiments, the first and second input vector can be the same (e.g., input vector 410, as shown in Fig. 4). System 100 can be configured to predict the page based on the predicted application state and the predicted data. In some embodiments, prediction component 400 can be configured to generate multiple page predictions. For example, prediction component 400 can be configured to generate a page prediction for each predicted data object and application state.

In some embodiments, prediction component 400 can be a component of system 100. For example, system 100 can be configured to implement application 120 and prediction component 400. As an additional example, prediction component 400 can be a component of application 120. In various embodiments, client 101 and/or server 103 can be configured to implement prediction component 400. In some aspects, client 101 can be configured to predict the application state and/or the data object. In various aspects, server 103 can be configured to predict the application state and/or the data object. In certain aspects, client 101 and server 103 can interact to predict one or more of the application state or the data object. For example, client 101 can provide at least a portion of the first input or second input to server 103. Client 101 can then receive from server 103 one or more of the predicted application state, data, and page.

Input vector 410, described in greater detail below, can include multiple elements, consistent with disclosed embodiments. These elements are not limited to a particular datatype, but can include without limitation objects, arrays, strings, characters, floating point numbers, or other datatypes.

State predictor 420 can include a neural network that generates state output 423 from input vector 410. The neural network can include an input layer, one or more hidden layers, and an output layer. The elements of input vector 410 can correspond to the nodes of the input layer. In some embodiments, the input layer can include between 5 and 100 nodes, or between 20 and 50 nodes. In various embodiments, the neural network can include a single hidden layer. The one or more hidden layers can include between 5 and 50 nodes. According to methods known to those of skill in the art, the nodes in each of the one or more hidden layers and the output layer can have values dependent on weights and the values of nodes in a preceding layer. The output layer can include nodes corresponding to at least some of the application states of application 120. The nodes in the output layer can have likelihood scores that indicate whether the application state corresponding to the node is the next application state. In some aspects, the likelihood scores can indicate a probability that the corresponding state is the next application state. In various aspects, the greatest score can correspond to the most-likely state, the next greatest score can correspond to the next-most-likely state, etc.

State feature extractor 421 can convert input vector 410 into a value for each of the nodes in the input layer, consistent with disclosed embodiments. In various aspects, state feature extractor 421 can be configured to calculate a hash over the value of each element in the input vector. State feature extractor 421 can assign the value of the hash to the corresponding node in the input layer. For example, when the element is a URL (e.g,. "StateA/StateC/StateE") then the hash of this URL (e.g., 8858d721629ce6f9c8ff608ce5cff8d1 for MD4) can be assigned to the corresponding node in the input layer. In some embodiments, the hash of an element can be computed over the raw binary values of the element. In some aspects, only a portion of this hash can be assigned (e.g., a subset of bits of the hash). The hash function can be the Fowler-Noll-Vo hash function, or another hashing function known in the art. Assigning the value of the hash to the node can include converting the value of the hash to a floating point number having a predetermined number of bits. This floating point number can be normalized to a predetermined range (e.g., 0 to 1).

State output 423 can be configured to select one or more predicted application states. In some embodiments, the selected application state can be the one or more most likely predicted application states. For example, state output 423 can select a predetermined number of the most likely predicted application states. As described above with regards to Fig. 1B, an application state can have an identifier, such as a text string (e.g., "StateA.StateC.StateE" or "StateA/StateC/StateE") or a numeric value. In some embodiments, state output 423 can include the identifier(s) for the one or more predicted application states.

Data predictor 430 can generate one or more predicted data objects for each predicted state received from state predictor 420. Data predictor 430 can include a neural network that generates data output 433. The neural network can include an input layer, one or more hidden layers, and an output layer. In some embodiments, the input layer can include between 5 and 100 nodes, or between 20 and 50 nodes. In various embodiments, the neural network can include a single hidden layer. The one or more hidden layers can include between 5 and 50 nodes. The neural network can generate data output 433 using one or more elements of state output 423 and an input vector. The input vector can be input vector 410 (as shown) or another vector (e.g., a vector differing from input vector 410 in one or more elements). The elements of the input vector can correspond to the nodes of the neural network input layer. According to methods known to those of skill in the art, the nodes in each of the one or more hidden layers and the output layer can have values dependent on weights and the values of nodes in a preceding layer.

As described above with regard to Fig. 2B, application 120 can be configured to select data objects (e.g., data object 231) from a set of data objects. In some embodiments, the output layer of data predictor 430 can include a node corresponding to each object in the set of data objects. The nodes in the output layer of data predictor 430 can have likelihood scores that indicate whether the data object corresponding to the node is the next data object. In some aspects, the likelihood scores can indicate a probability that the corresponding data object is the next application data object. In various aspects, the greatest score can correspond to the most-likely data object, the next greatest score can correspond to the next-most-likely data object, etc.

Data object feature extractor 431 can convert the input vector and the one or more states output from state predictor 420 into a value for each of the nodes in the input layer, consistent with disclosed embodiments. In some aspects, the input layer of data predictor 430 includes input nodes corresponding to the one or more states output from state predictor 420 and the elements of input vector 410. In various aspects, data object feature extractor 431 can be configured to calculate a hash over the value of each element and assign the value of the hash to the corresponding node in the input layer. In some embodiments, the hash of an element can be computed over the raw binary values of the element. In some aspects, only a portion of this hash can be assigned (e.g., a subset of bits of the hash). In some aspects, the hash function may be the Fowler-Noll-Vo hash function. Assigning the value of the hash to the node can include converting the value of the hash to a floating point number having a predetermined number of bits. This floating point number can be normalized to a predetermined range (e.g., 0 to 1).

In some embodiments, when the input vector for state predictor 420 shares common elements with the input vector for data predictor 430, prediction component 400 can be configured to hash these common elements once, and then assign the resulting values to corresponding nodes in the input layers of both state predictor 420 and data predictor 430. For example, when the input vector for data predictor 430 equals input vector 410, prediction component 400 can be configured to hash input vector 410 once, and to reuse the hashed values of input vector 410 as inputs for data predictor 430.

Data output 433 can select one or more predicted data objects. In some embodiments, the selected data objects can be the one or more most likely predicted data object. For example, data output 433 can select a predetermined number of the most likely predicted data objects. In some embodiments, data object can have an identifier, such as a text identification string (e.g., "2 Seaport Lane") or a numeric identification value. In some embodiments, data output 433 can include the identifier(s) for the one or more predicted states.

Predicted page 440 can indicate the predicted page based on input vector 410 (and, in some embodiments, additionally based on a second, differing vector input to data predictor 430, as described above). In some embodiments, predicted page 440 can include one or more pairs of state and data object. For example, predicted page 440 can include the most-likely application state and the most-likely data object. As described above, when state predictor 420 outputs multiple state objects, predicted page 440 can include a state-data pair for each of the state objects and the most-likely data object for that state object. Likewise, when data predictor 430 outputs multiple data objects, predicted page 440 can include a state-data pair for each of the state objects and each of the data objects for that state object. In some embodiments, predicted page 440 can be based on one or more pairs of application states and data objects. For example, predicted page 440 can include data or instructions for creating, or dynamically updating, page 235 to indicate the predicted page. For example the data or instructions can configure application 120 to display a link on page 235 to the predicted page, or modify a graphical element of page 235 to indicate that interacting with that element would cause application 120 to transition to the predicted page.

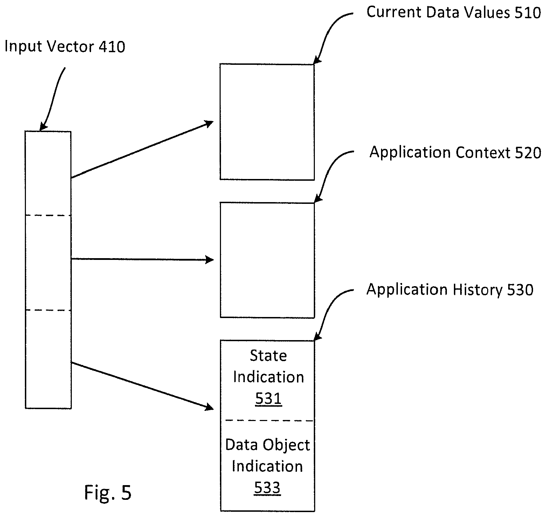

Fig. 5 depicts an exemplary input vector 410, consistent with disclosed embodiments. As shown in Fig. 5, input vector 410 can include current data values 510, application context 520, and application history 530. As described above, system 100 can be configured to predict one or more next pages by applying input vector 410 to state predictor 420 and by applying input vector 410 (or a differing input vector in some embodiments) to data predictor 430.

Current data values 510 can include one or more elements with values based on a current data object. For example, the application can be in a current state. In this current state the application can be operating on a current data object. In some aspects, one or more values can be associated with this current data object. For example, this current data object can have one or more parameters. These parameters can take values. For example, an email message object can include a sender parameter, a recipient parameter, and a content parameter, each taking a value.

Application context 520 can include one or more elements indicating a context in which the user is interacting with application 120. In some embodiments, application context 520 can further specify who is using the application 120. For example, when server 103 provides application 120 to multiple different entities (e.g., different companies or individuals), the user can be associated with that entity (e.g., the user can be an employee of the entity). Application context 520 can then include one or more elements indicating the entity associated with the user. In some aspects, application context 520 can include one or more elements indicating at least one of the user associated with the entity (e.g., a username), a role of the user (e.g., "Associate," "Trainee," etc.), or an authorization of the user (e.g., "User," "Admin," "Root," etc. ). In some embodiments, application context 520 can further specify when the user is interacting with the application 120. For example, application context 520 can then include one or more elements indicating at least one of weekday, date, or time of the interaction.

Application history 530 can indicate the trajectory of the user through application 120. In some embodiments, application history 530 can indicate the pages most recently visited by the user. Application history 530 can be limited to a predetermined number of the most recently visited pages. This predetermined number can range between 1 and 20, or between 5 and 15. Application history 530 can be structured as a queue, with the indication of the most recently visited page in an initial position, and the indication of the least recently visited page in the last position. When a new page is visited, the least recently visited page is popped from the last position and an indication of the new page is pushed into the initial position. In some embodiments, the elements of application history 530 can be initialized to default values (e.g., a value of zero or "null"). As the user interacts with application 120, these default values are progressively overwritten. In this manner, application history 530 can document the path of the user through application 120.

In some embodiments, application history 530 can indicate each page with a pair of elements: an element indicating an application state (e.g., state indication 531) and an element indicating a data object operated upon by the application state to generate the page (e.g., data object indication 533). In some aspects, an application state may not operate upon a data object to generate a page (e.g., a menu or initial splash screen of the application may not take a data object). In such aspects, a default value (e.g., a value of zero or "null") can be assigned to data object indication 533 to indicate that the application state did not take a data object. As previously described, application 120 can be configured to assign unique identifiers to states and data objects. These identifiers can be text strings or numeric values. An element of application history 530 indicating a state (e.g., state indication 531) can include such a unique identifier, or a value based on the unique identifier. Likewise, an element of application history 530 indicating a data object (e.g., data object indication 521) can include such a unique identifier, or a value based on the unique identifier.

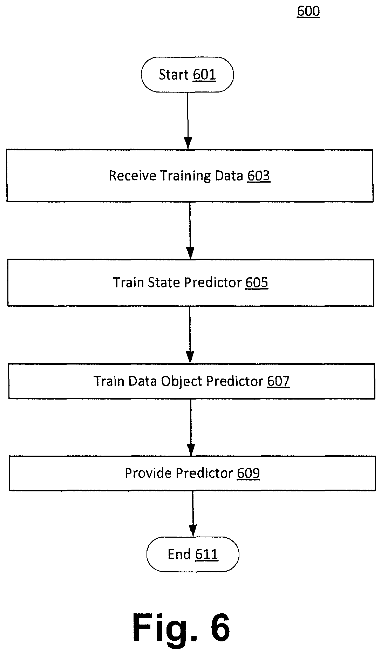

Fig. 6 depicts a flowchart illustrating an exemplary method 600 for training prediction component 400, consistent with disclosed embodiments. In some embodiments, method 600 can include steps of receiving training data, training a state predictor, training a data object predictor, and providing the prediction model for use with application 120. As would be recognized by one of skill in the art, this particular sequence of steps is not intended to be limiting. The steps of method 600 can be combined or divided, and method 600 can include additional steps or fewer steps, without departing from the envisioned embodiments.

After starting in step 601, the training system can be configured to receive training data in step 603. In some embodiments, the training data can include both information for predicting the next page and information identifying the actual next page. For example, the training data can include the data input to state predictor 420 (e.g., the contents of input vector 410), the data input to data predictor 430 (if different from the contents of input vector 410), an identifier for the actual next state, and an identifier for the actual next data object.

In some embodiments, the training system can be configured to receive the training data from a system that provides application 120 to users. For example, system 100 can be configured to store and/or provide a record of user interactions with application 120 to the training system. For example, client 101 and/or server 103 can be configured to provide such a record. In some aspects, the training system can receive the training data directly from the system that provides application 120 to users. In various aspects, the training system can receive the training data indirectly. For example, the training system can receive the training data from a database. This database can in turn receive the training data from the system that provides application 120 to users. In some aspects, the training system can receive the training data as this training data is generated. In various aspects, the training system can receive the training data repeatedly or periodically.

After step 603, the training system can be configured to train a state predictor in step 605. In some embodiments, the training system can be configured to use the training data to generate predicted states. In some aspects, the training system can be configured to generate input vectors and apply those input vectors to a state predictor neural network (e.g., state predictor 420). The state predictor neural network can be configured to generate application state predictions based on the training data. The training system can be configured to compare these application state predictions to the actual application states chosen by the user to generate an error signal. According to methods known to one of skill in the art, the training system can use this error signal to update the weights of the nodes of the one or more hidden layers and output layer. According to methods known in the art, the training system can be configured to generate application state predictions from the training data, to generate error signals using predicted and actual application states, and to update the weights until one or more training criteria are satisfied. In some aspects, the training criteria can include an accuracy criteria based on (i) the number of times the predicted state matches the actual state and (ii) the number of entries in the training data. In various aspects, the training criteria can include a mean square error criteria based on a comparison of the predicted state and the actual state, weighted by the number of application states and the number of observations in the training data.

After step 603, the training system can be configured to train a data object predictor in step 607. In some embodiments, the training system can be configured to train a state predictor in step 605 and then train a data object predictor in step 607. In various embodiments, the training system can alternate between training a state predictor and training a data predictor. For example, the training system can receive a batch of training data, train the state predictor using the batch of training data, and then train the data object predictor using the output of the state predictor and the batch of training data. The training system can then repeat this training process with the next batch of training data.

In some embodiments, the training system can be configured use the training data to generate predicted data objects. In some aspects, the training system can be configured to generate input vectors and apply those input vectors to a data predictor neural network (e.g., data predictor 430). The data predictor neural network can be configured to generate predicted data objects based on the training data. The training system can be configured to compare these predicted data object to the actual data objects chosen by the user to generate an error signal. According to methods known to one of skill in the art, the training system can use this error signal to update the weights of the nodes of the one or more hidden layers and output layer. According to methods known in the art, the training system can be configured to generate data object predictions from the training data, to generate error signals using predicted and actual data objects, and to update the weights until one or more training criteria are satisfied. In some aspects, the training criteria can include an accuracy criteria based on (i) the number of times the predicted data object matches the actual data object and (ii) the number of entries in the training data. In various aspects, the training criteria can include a mean square error criteria based on a comparison of the predicted data object and the actual data object, weighted by the number of data objects in the predetermined set of data objects and the number of observations in the training data.

After step 605 and step 607, the training system can be configured to provide the state predictor and the data object predictor to system 100 in step 609. For example, the training system can provide the state predictor and the data object predictor to client 101 and/or server 103. In some embodiments, the training system can provide the state predictor and the data object predictor to system 100 as objects (e.g., data structures). In various embodiments, the training system can be configured to provide the weights for the state predictor and the data object predictor to system 100. In various embodiments, the training system can be configured to provide updates to an existing state predictor and data object predictor of system 100.

In some embodiments, the training system and system 100 can be running on the same computing devices. For example, system 100 and the training system can both be running on server 103. In various embodiments, system 100 can be used for training. For example, system 100 can be configured to operate in a training mode, relying on user input for training data, and then switch to prediction mode when training criteria are satisfied. After step 609, method 600 can end at step 611.

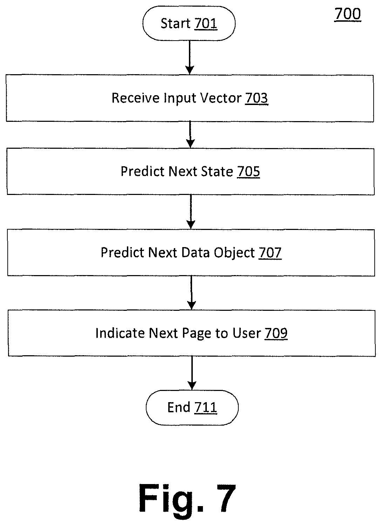

Fig. 7 depicts a flowchart illustrating a method 700 of application navigation using neural networks, consistent with disclosed embodiments. According to method 700, prediction component 400 can receive an input vector, predict a next state, predict a next data object, and indicate a next page to the user. As would be recognized by one of skill in the art, this particular sequence of steps is not intended to be limiting. The steps of method 700 can be combined or divided, and method 700 can include additional steps or fewer steps, without departing from the envisioned embodiments.

After starting in step 701, prediction component 400 can be configured to receive an input vector in step 703. In some aspects, prediction component 400 can be configured to receive elements of the input vector directly or indirectly from application 120. For example, in some embodiments prediction component 400 can be built-in to application 120, and can create the input vector from values stored by application 120. As an additional example, system 100 can be configured to implement prediction component 400 and application 120 as separate applications. Application 120 can then provide values for the elements of the input vector directly to prediction component 400, or can provide these values to a memory or database. Prediction component 400 can then retrieve these values from the memory or database.

As disclosed above with regards to Fig. 5, in some embodiments the input vector can include current data values 510, application context 520, and application history 530. Receiving the input vector can include receiving application context information from the user. For example, as disclosed above, application context 520 can include one or more elements indicating who is using the application 120 (e.g., the entity associated with the user, a username, a user role or job title, or a user authorization or job responsibility) or when the user is interacting with the application 120 (e.g., at least one of weekday, date, or time of the interaction). Prediction component 400 can be configured to receive this information once (e.g., when the user logs on to application 120) and reuse this information to generate the input vector as necessary.

After step 703, prediction component 400 can be configured to predict at least one next application state in step 705. As disclosed above with regard to Fig. 4, prediction component 400 can be configured to convert the values of the input vector to numbers using state feature extractor 421. In some embodiments, prediction component 400 can perform this conversion using a hashing function. For example, prediction component 400 can be configured to generate a hash of the raw binary values of each element of the input vector. The hashing function can be the Fowler-Noll-Vo hash function, or another hashing function known in the art. The hashed values can be applied to the input nodes of state predictor 420. Prediction component 400 can propagate these hashed values forward through the one or more hidden layers and the output layer to generate likelihood scores. These likelihood scores can depend on the input hashed values and the weights of state predictor 420 (which can be determined according to method 600). State output 423 can be configured to select one or more of the most likely predicted application states. For example, state output 423 can be configured to select as the predicted application state the application state corresponding to the node of the output layer with the greatest likelihood value. As an additional example, state output 423 can be configured to select the application states corresponding to a predetermined number of nodes of the output layer with the greatest likelihood values.

After step 705, prediction component 400 can be configured to predict at least one next data object in step 707. In some embodiments, for each state selected by state output 423, prediction component 400 can be configured to generate one of more data objects. As disclosed above with regard to Fig. 4, prediction component 400 can be configured to convent the identifiers of the one or more application states selected by state output 423 and the values of the input vector to numbers using data object feature extractor 431. In some embodiments, data object feature extractor 431 can use a hashing function to perform this conversion. For example, prediction component 400 can be configured to generate a hash of the raw binary values of each element of the input vector. The hashing function can be the Fowler-Noll-Vo hash function, or another hashing function known in the art. The hashed values can be applied to the input nodes of data predictor 430. System 100 can propagate these hashed values forward through the one or more hidden layers and the output layer to generate likelihood scores. These likelihood scores can depend on the input hashed values and the weights of data predictor 430 (which can be determined according to method 600). Data output 433 can be configured to select one or more of the most likely predicted application states. For example, data output 433 can be configured to select as the predicted data object the data object corresponding to the node of the output layer with the greatest likelihood value. As an additional example, data output 433 can be configured to select the application states corresponding to a predetermined number of nodes of the output layer with the greatest likelihood values.

After step 707, prediction component 400 can be configured to indicate at least one next page to the user in step 709. This indication can depend on the predicted one or more pairs of application states and data objects. For example, prediction component 400 can provide data or instructions for indicating the one or more predicted pages. For example the data or instructions can configure application 120 to display one or more links to the one or more predicted pages, or modify one or more graphical elements of an existing page to indicate that interacting with the one or more elements would cause application 120 to transition to the one or more predicted pages (e.g., highlight, emphasize, animate, change the color of the element, etc.). As an additional example, data or instructions can configure application 120 to display explicit instructions indicating the next page. These instructions can be displayed in an inset page, or in a separate page. In some aspects, the data or instructions can be provided to client 101, which can use them to dynamically update an existing page. In various aspects, the data or instructions can be provided to server 103, which can use them to create a new page for provision to client 101. After step 709, method 700 can end at step 711.

The preceding disclosure describes embodiments of a system for application navigation using linked neural networks. Such a system can generally be used with applications provided as described in Fig. 1. Additionally, such a system can be used for navigating an application provided by client 101. For example, an application provided by client 101 can be configured to report usage information including application state and data object information to server 103. In this non-limiting example the application may not obtain the data objects (or the information contained in the data objects) from server 103. Based on usage information received from multiple users, server 103 can be configured to generate a state predictor and a data object predictor. Sever 103 can be configured to provide this application state predictor and data object predictor to a prediction component of the application running on client 101.

### Exemplary Application: Property Management Application

The envisioned systems and methods can be used to provide recommendations to users of a property management application. This exemplary application demonstrates the applicability of the envisioned embodiments to the art and is not intended to be limiting.

Consistent with Fig. 1, a server can be configured to provide the property management application to clients. Users can interact with the application through the clients. Consistent with Fig. 2A, the states of the property management application can be linked, so that a user can transition between them. Consistent with Fig. 2B, the property management application can include application states that define the appearance and functionality of pages of the property management application. These application states can be defined using templates including markup language and scripting commands. For example, the application can include application states defined using ANGULAR UI^{®}, REACT^{®}, or a similar JavaScript^{®} framework. Consistent with Fig. 2B, the property management application can operate on data objects representing properties. These data management objects can include fields describing characteristics of the properties, such as ownership, brand, property name, property location, inventory at property, inventory pricing, policies, promotions, reservation classes, and other property characteristics known to those of skill in the art. Consistent with disclosed embodiments, an application state can operate on a data object representing a policy to generate a page. As previously disclosed, users can interact with one or more pages to perform tasks. In this example, a task could include modifying available inventory at a property. The user could select a property using a first page, navigate to a second page allowing the user to add inventory at that property, and then navigate to a third page allowing the user to modify pricing and reservation classes for that newly added inventory.

Consistent with Figs. 3A and 3B, the property management system can be configured to display pages, and the likelihood that a user will transition from one page to another can depend on the prior trajectory of the user through the property management application.

Consistent with Fig. 4, in some embodiments, the property management application can include a prediction component 400 configured to use linked neural networks to predict the next page with which the user should interact. This prediction element can include an input vector 410, a state predictor 420, a data predictor 430, and a page prediction. As a non-limiting example, the neural networks can be implemented using JAVA^{®}.

Consistent with Fig. 5, in some embodiments, the input vector can include current data values 510, application context 520, and application history 530. In some aspects, current data values 510 can include values of the current data object, as shown in the following exemplary pseudocode:
inputvector <= get(propertyCode);
inputvector <= get(propertyDetails.externalInventory);
inputvector <= get(propertyDetails.interfacedAvalon);
inputvector <= get(propertyDetails.interfacedRms);
inputvector <= get(propertyDetails.overrideSellStrategy);
inputvector <= get(propertyDetails.regionConversion);
inputvector <= get(propertyDetails.roomClass);
inputvector <= get(propertyDetails.tieredPricing);
inputvector <= get(propertyDetails.visibility);
inputvector <= get(propertyDetails.status);
inputvector <= get(propertyDetails.marketingCity);
inputvector <= get(propertyDetails.brandConversion);
inputvector <= get(propertyDetails.classSharing);

Thus current data values 510 can include information about inventory, pricing, and location of the current data object.

In various aspects, application context 520 can include contextual parameters concerning the user of the property management application, as shown in the following exemplary pseudocode:
inputvector <= get(login);
inputvector <= get(day);
inputvector <= get(month);
inputvector <= get(chainCode);
inputvector <= get(brandCode);

Thus the application context 520 can include the login information of the user, the day and month of the user, and information describing the owner and the brand.

In various aspects, application history 530 can include the prior application states and parameter ids of the user, as shown in the following exemplary pseudocode:
inputvector <= [get(prior_states), get(prior_data_objects)];
Thus application history 530 can include pairs of prior application states and data objects operated upon while the application was in those states.

Consistent with Fig. 6, in some embodiments the prediction element of the property management application can be trained. As disclosed with regards to Fig. 6, a training system can be configured to receive training data. In some aspects, this training system can be the system implementing the property management application. In various aspects, this training system can be a separate system that receives the training data from the system implementing the property management application. The training data can include the data disclosed above, and can additionally include the current application state and the current data object. As disclosed with regards to Fig. 6, the training system can be configured to train a state predictor and an object predictor. The state predictor and the object predictor can be provided to the system implementing the property management application.

Consistent with Fig. 7, in some embodiments, the prediction component of the property management application can be configured to receive an input vector, predict a next state, predict a next data object, and then indicate one or more predicted next pages to the user. In some embodiments, this prediction can be performed when a user transitions from a first page to a second page in the property management application. In this example, the user could transition to one of the one or more predicted next pages from the second page. As disclosed above with regard to Fig. 7, the prediction component of the property management application can be configured to provide an indication of the predicted page to the user. In some aspects, this indication can be provided as a dynamic update to the second page. In various aspects, a modified second page can be provided to the client for display to the user.

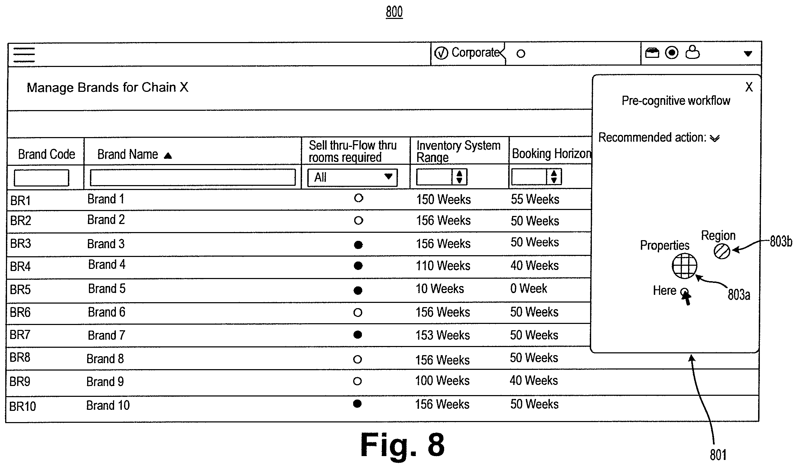

Fig. 8 depicts an exemplary graphical user interface 800 for a property management application, consistent with disclosed embodiments. As shown in Fig. 8, the prediction component can be configured to provide instructions for modifying graphical user interface 800 to include inset 801. Inset 801 can include icons corresponding to the predicted next pages (in this example properties 803a and region 803b). As shown, these icons can vary in size and/or color. In some aspects, these variations can indicate differences in likelihood. For example, when the more likely next page is properties 803a, the icon corresponding to properties 803a can be larger than the icon corresponding to region 803b. In some embodiments, graphical user interface 800 can be configured to modify icons on mouse-over events. For example, when the cursor is place over one of the icons, that icon can increase in size, change shape, or change color. In some embodiments, selecting one of these icons can cause the property management application to transition to the corresponding page.

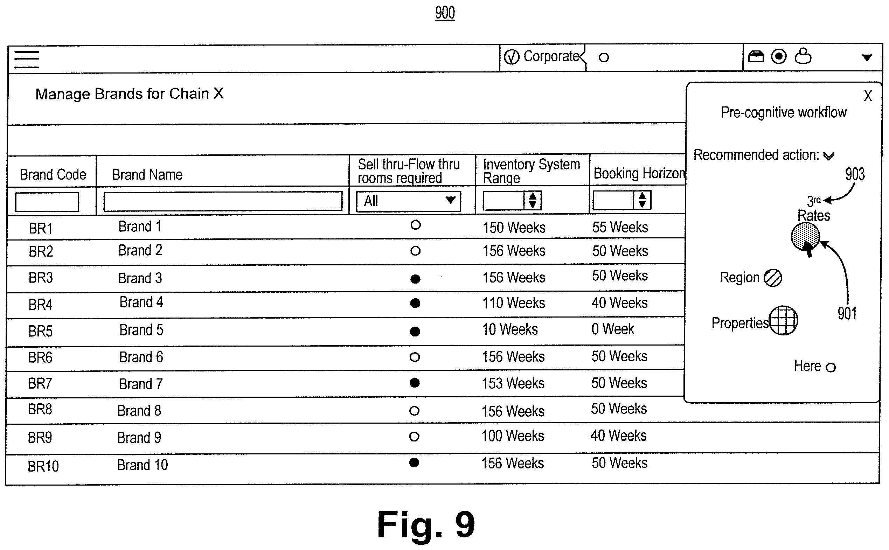

Fig. 9 depicts an additional exemplary graphical user interface 900 for a property management application, consistent with disclosed embodiments, As shown in Fig. 9, the prediction component can be configured to provide instructions for modifying graphical user interface 900 to include a textual indication 903 of the relative likelihood of the predicted next page corresponding to graphical element 901. In some embodiments, this textual indication can be provided in addition to indicating relative page likelihoods using the relative size of corresponding icons.

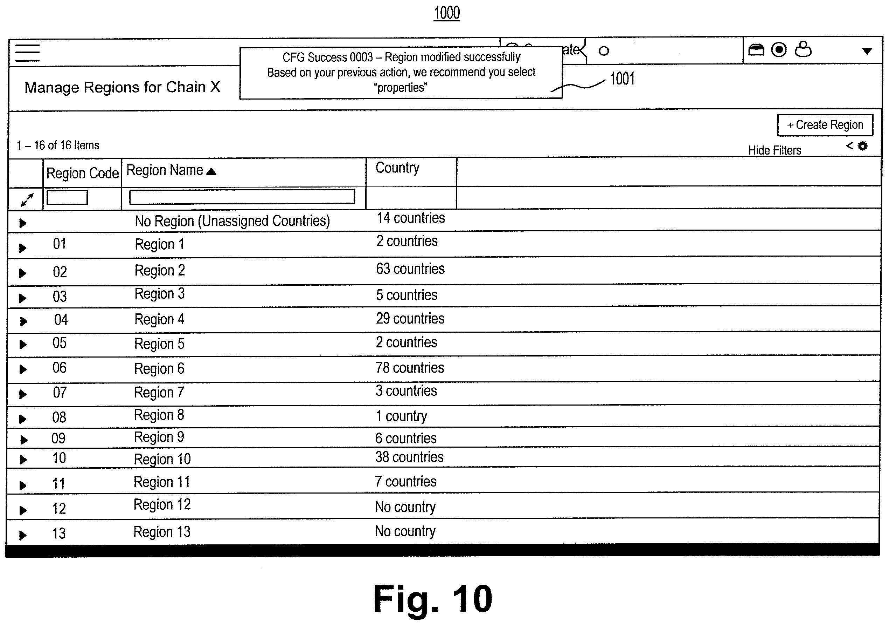

Fig. 10 depicts a further exemplary graphical user interface 1000 for a property management application, consistent with disclosed embodiments. As shown in Fig. 10, the prediction component can be configured to provide instructions for modifying graphical user interface 1000 to include an inset 1001. Inset 1001 can include a textual description of a predicted next page.

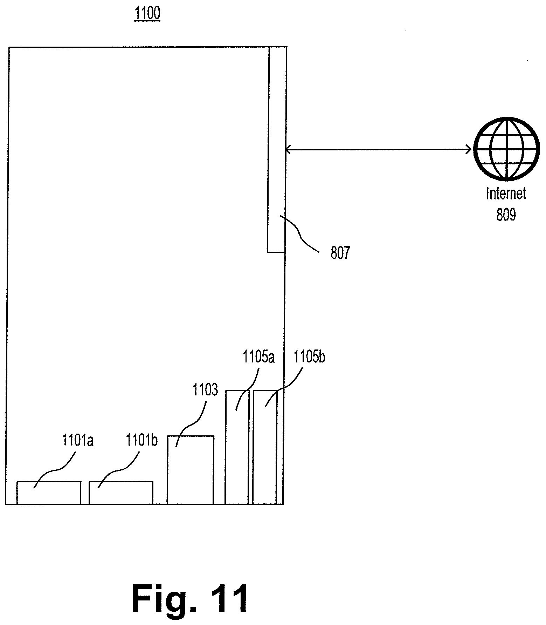

Fig. 11 is a block diagram of an example device with which the systems, methods, and apparatuses of the present invention may be implemented. Example device 1100 may include at least one processor (e.g., processor 1103) and at least one memory (e.g., memories 1105a and 1105b). Processor 1103 may comprise a central processing unit (CPU), a graphics processing unit (GPU), or other similar circuitry capable of performing one or more operations on a data stream. Processor 1103 may be configured to execute instructions that may, for example, be stored on one or more of memories 1105a and 1105b. Memories 1105a and 1105b may be volatile memory (such as RAM or the like) and/or non-volatile memory (such as flash memory, a hard disk drive, or the like). As explained above, memories 1105a and 1105b may store instructions for execution by processor 1103. As further depicted in FIG. 11, user interface device 1100 may include at least one network interface controller (NIC) (e.g., NIC 1115). NIC 1115 may be configured to facilitate communication over at least one computing network (e.g., network 1117). Communication functions may thus be facilitated through one or more NICs, which may be wireless and/or wired and may include an Ethernet port, radio frequency receivers and transmitters, and/or optical (e.g., infrared) receivers and transmitters. The specific design and implementation of the one or more NICs depend on the computing network 1117 over which user interface device 1100 is intended to operate. For example, in some embodiments, user interface device 1100 may include one or more wireless and/or wired NICs designed to operate over a GSM network, a GPRS network, an EDGE network, a Wi-Fi or WiMax network, and a Bluetooth^{®} network. Alternatively or concurrently, user interface device 1100 may include one or more wireless and/or wired NICs designed to operate over a TCP/IP network. As depicted in FIG. 11, user interface device 1100 may include and/or be operably connected to a storage device 1121. Storage device 1121 may be volatile (such as RAM or the like) or non-volatile (such as flash memory, a hard disk drive, or the like). I/O module 1119 may enable communications between processor 1103, memories 1105a and 1105b, NIC 1115, and/or storage device 1121. Processor 1103, memories 1105a and 1105b, NIC 1115, and/or storage device 1121 may comprise separate components or may be integrated in one or more integrated circuits. The various components in user interface device 1100 may be coupled by one or more communication buses or signal lines (not shown).

Instructions or operational steps stored by a computer-readable medium may be in the form of computer programs, program modules, or codes. As described herein, computer programs, program modules, and code based on the written description of this specification, such as those used by the processor, are readily within the purview of a software developer. The computer programs, program modules, or code can be created using a variety of programming techniques. For example, they can be designed in or by means of Java, C, C++, assembly language, or any such programming languages. One or more of such programs, modules, or code can be integrated into a device system or existing communications software. The programs, modules, or code can also be implemented or replicated as firmware or circuit logic.

## Claims

1. A system for application navigation using neural networks comprising a server (103) and a client (101), wherein:
the server (103) is arranged to provide an application to the client (101), the application comprising application states (233) that operate on data objects (231) to generate user interface pages (235);
the server (103) and/or the client (101) is arranged to predict a next user interface page using an application state-predicting neural network (420) and a data object-predicting neural network (430); the prediction comprising:
predicting a next application state (233) using the application state-predicting neural network (420) and a first input vector, wherein an output layer of the application state-predicting neural network (420) comprises output nodes corresponding to the application states (233), the nodes in the output layer comprising likelihood scores indicating whether the application state corresponding to the node is the next application state, wherein a greatest score indicates a most-likely application state; and
predicting a next data object (231) using the data object-predicting neural network (430), a second input vector (410), and the next application state (233), wherein an output layer of the data object-predicting neural network (430) comprises output nodes corresponding to the data objects (231), the nodes in the output layer comprising likelihood scores indicating whether the data object (231) corresponding to the node is the next data object, wherein a greatest score indicates a most-likely data object; and
the client (101) is arranged to display an indication of the predicted next user interface page comprising the client (101) being arranged to:
dynamically generate a current user interface page according to a current application state using a current data object,
display the current user interface page, the current page modified to indicate the predicted next user interface page.

2. The system of claim 1, wherein the server (103) and/or the client (101) are arranged to predict the next application state using the application state-predicting neural network and the first input vector comprises hashing the first input vector.

3. The system of any one of the preceding claims, wherein common elements of the first input vector and the second input vector are hashed once and reused for predicting the next data object.

4. The system of any one of the preceding claims, wherein the first input vector and the second input vector are the same vector.

5. The system of any one of the preceding claims, wherein the first input vector comprises an application history and/or includes elements indicating at least one of an entity, a user associated with the entity, a role of the user, an authorization level of the user, a weekday, a date, a time, or value of the current data object.

6. The system of claim 5, wherein the application history includes elements indicating prior application states and prior data objects associated with previously visited pages.

7. The system of any one of the preceding claims, wherein the client (101) is arranged to display indications of multiple predicted next pages including the predicted next page.

8. The system of claim 7, wherein the client (101) is arranged to display indications of the multiple predicted next pages include instructions to indicate relative likelihoods of the multiple predicted next pages.

9. The system of any one of the preceding claims, wherein the client (101) is arranged to update the current page to include a graphical element indicating the predicted next page or to modify a graphical element of the current page to indicate the predicted next page.

10. The system of claim 9, wherein the graphical element is an inset window including an icon corresponding to the predicted next page, the icon preferably being selectable to transition to the predicted next page.

11. The system of claim 9 or claim 10, wherein modifying the existing graphical element of the current page includes changing at least one of a placement, shape, size, or color of the existing graphical element; or changing at least one of a placement, font, size, emphasis, or color of text associated with the existing graphical element.

12. A method for application navigation using neural networks comprising the method steps executed by the system of any one of claims 1 to 11.

13. A computer program product comprising program code instructions stored on a computer readable medium to implement the method steps according to the claim 12 when said program is executed on a computer.

## Patentansprüche

1. System zur Applikations-Navigation unter Verwendung neuronaler Netze mit einem Server (103) und einem Client (101), wobei:
der Server (103) eingerichtet ist, um dem Client (101) eine Applikation bereitzustellen, wobei die Applikation Applikationszustände (233) umfasst, die auf Datenobjekten (231) operieren, um Benutzerschnittstellenseiten (235) zu erzeugen;
der Server (103) und/oder der Client (101) eingerichtet ist, um eine nächste Benutzerschnittstellenseite unter Verwendung eines neuronalen Netzes (420) zur Vorhersage eines Applikationszustands und eines neuronalen Netzes (430) zur Vorhersage eines Datenobjekts vorherzusagen; wobei die Vorhersage umfasst:
Vorhersagen eines nächsten Applikationszustands (233) unter Verwendung des neuronalen Netzes (420) zur Vorhersage eines Applikationszustandes und eines ersten Eingabevektors, wobei eine Ausgabeschicht des neuronalen Netzes (420) zur Vorhersage eines Applikationszustands Ausgabeknoten umfasst, die den Applikationszuständen (233) entsprechen, wobei die Knoten in der Ausgabeschicht Wahrscheinlichkeitsbewertungen umfassen, die angeben, ob der dem Knoten entsprechende Applikationszustand der nächste Applikationszustand ist, wobei eine größte Bewertung einen wahrscheinlichsten Applikationszustand angibt; und
Vorhersagen eines nächsten Datenobjekts (231) unter Verwendung des neuronalen Netzes (430) zur Vorhersage von Datenobjekten, eines zweiten Eingabevektors (410) und des nächsten Applikationszustands (233), wobei eine Ausgabeschicht des neuronalen Netzes (430) zur Vorhersage von Datenobjekten Ausgabeknoten umfasst, die den Datenobjekten (231) entsprechen, wobei die Knoten in der Ausgabeschicht Wahrscheinlichkeitsbewertungen umfassen, die angeben, ob das dem Knoten entsprechende Datenobjekt (231) das nächste Datenobjekt ist, wobei eine größte Bewertung ein wahrscheinlichstes Datenobjekt angibt; und
der Client (101) eingerichtet ist, um eine Angabe der vorhergesagten nächsten Benutzerschnittstellenseite anzuzeigen, wobei der Client (101) eingerichtet ist, um:
eine aktuellen Benutzeroberflächenseite gemäß einem aktuellen Zustand der Applikation unter Verwendung eines aktuellen Datenobjekts dynamisch zu erzeugen,
die aktuellen Benutzeroberflächenseite anzugeben, wobei die aktuelle Seite modifiziert ist, um die vorhergesagte nächste Benutzeroberflächenseite anzuzeigen.

2. System nach Anspruch 1, wobei der Server (103) und/oder der Client (101) eingerichtet sind, um den nächsten Applikationszustand unter Verwendung des neuronalen Netzes zur Vorhersage eines Applikationszustands vorherzusagen und der erste Eingabevektor ein Hashing des ersten Eingabevektors umfasst.

3. System nach einem der vorhergehenden Ansprüche, wobei gemeinsame Elemente des ersten Eingabevektors und des zweiten Eingabevektors einmal gehasht und zur Vorhersage des nächsten Datenobjekts wiederverwendet werden.

4. System nach einem der vorhergehenden Ansprüche, wobei der erste Eingabevektor und der zweite Eingabevektor derselbe Vektor sind.

5. System nach einem der vorhergehenden Ansprüche, wobei der erste Eingabevektor eine Applikationshistorie umfasst und/oder Elemente enthält, die mindestens eines der folgenden Elemente angeben: eine Einheit, einen mit der Einheit verbundenen Benutzer, eine Rolle des Benutzers, eine Berechtigungsstufe des Benutzers, einen Wochentag, ein Datum, eine Uhrzeit oder einen Wert des aktuellen Datenobjekts.

6. System nach Anspruch 5, wobei die Anwendungshistorie Elemente enthält, die frühere Anwendungszustände und frühere Datenobjekte angeben, die mit früher besuchten Seiten verbunden sind.

7. System nach einem der vorhergehenden Ansprüche, wobei der Client (101) eingerichtet ist, um Angaben zu mehreren vorhergesagten nächsten Seiten einschließlich der vorhergesagten nächsten Seite anzugeben.

8. System nach Anspruch 7, wobei der Client (101) eingerichtet ist, um Angaben zu den mehreren vorhergesagten Folgeseiten anzugeben, die Anweisungen zum Angeben relativer Wahrscheinlichkeiten der mehreren vorhergesagten Folgeseiten enthalten.

9. System nach einem der vorhergehenden Ansprüche, wobei der Client (101) eingerichtet ist, die aktuelle Seite zu aktualisieren, um ein grafisches Element einzuschließen, das die vorhergesagte nächste Seite angibt, oder um ein grafisches Element der aktuellen Seite zu modifizieren, um die vorhergesagte nächste Seite anzugeben.

10. System nach Anspruch 9, wobei das grafische Element ein Einschubfenster ist, das ein Symbol enthält, das der vorhergesagten nächsten Seite entspricht, wobei das Symbol vorzugsweise auswählbar ist, um zu der vorhergesagten nächsten Seite zu wechseln.

11. System nach Anspruch 9 oder Anspruch 10, wobei das Modifizieren des vorhandenen grafischen Elements der aktuellen Seite das Ändern von mindestens einer der folgenden Eigenschaften umfasst: Platzierung, Form, Größe oder Farbe des vorhandenen grafischen Elements; oder Ändern von mindestens einer der folgenden Eigenschaften: Platzierung, Schriftart, Größe, Hervorhebung oder Farbe des mit dem vorhandenen grafischen Element verbundenen Texts.

12. Verfahren zur Anwendungsnavigation unter Verwendung neuronaler Netze, umfassend die Verfahrensschritte, die von dem System nach einem der Ansprüche 1 bis 11 ausgeführt werden.

13. Computerprogrammprodukt mit Programmcodeanweisungen, die auf einem computerlesbaren Medium gespeichert sind, um die Verfahrensschritte nach Anspruch 12 zu implementieren, wenn das Programm auf einem Computer ausgeführt wird.

## Revendications

1. Système pour la navigation dans une application utilisant des réseaux neuronaux comprenant un serveur (103) et un client (101), dans lequel :
le serveur (103) est agencé pour fournir une application au client (101), l'application comprenant des états d'application (233) qui opèrent sur des objets de données (231) pour générer des pages d'interface utilisateur (235) ;
le serveur (103) et/ou le client (101) est agencé pour prédire une prochaine page d'interface utilisateur en utilisant un réseau neuronal de prédiction d'état d'application (420) et un réseau neuronal de prédiction d'objet de données (430) ; la prédiction comprenant :
la prédiction d'un prochain état d'application (233) en utilisant le réseau neuronal de prédiction d'état d'application (420) et un premier vecteur d'entrée, dans lequel une couche de sortie du réseau neuronal de prédiction d'état d'application (420) comprend des noeuds de sortie correspondant aux états d'application (233), les noeuds dans la couche de sortie comprenant des scores de probabilité indiquant si l'état d'application correspondant au noeud est le prochain état d'application, dans lequel un score le plus élevé indique un état d'application le plus probable ; et
la prédiction d'un prochain objet de données (231) en utilisant le réseau neuronal de prédiction d'objet de données (430), un second vecteur d'entrée (410) et le prochain état d'application (233), dans lequel une couche de sortie du réseau neuronal de prédiction d'objet de données (430) comprend des noeuds de sortie correspondant aux objets de données (231), les noeuds dans la couche de sortie comprenant des scores de probabilité indiquant si l'objet de données (231) correspondant au noeud est le prochain objet de données, dans lequel un score le plus élevé indique un objet de données le plus probable ; et
le client (101) est agencé pour afficher une indication de la prochaine page d'interface utilisateur prédite comprenant le client (101) étant agencé pour :
générer dynamiquement une page d'interface utilisateur courante conformément à un état d'application courant en utilisant un objet de données courant,
afficher la page d'interface utilisateur courante, la page courante étant modifiée pour indiquer la prochaine page d'interface utilisateur prédite.

2. Système selon la revendication 1, dans lequel le serveur (103) et/ou le client (101) sont agencés pour prédire le prochain état d'application en utilisant le réseau neuronal de prédiction d'état d'application et le premier vecteur d'entrée comprend un hachage du premier vecteur d'entrée.

3. Système selon l'une quelconque des revendications précédentes, dans lequel des éléments communs du premier vecteur d'entrée et du second vecteur d'entrée sont hachés une fois et réutilisés pour prédire le prochain objet de données.

4. Système selon l'une quelconque des revendications précédentes, dans lequel le premier vecteur d'entrée et le second vecteur d'entrée sont le même vecteur.

5. Système selon l'une quelconque des revendications précédentes, dans lequel le premier vecteur d'entrée comprend un historique d'application et/ou comporte des éléments indiquant au moins un parmi une entité, un utilisateur associé à l'entité, un rôle de l'utilisateur, un niveau d'autorisation de l'utilisateur, un jour de la semaine, une date, une heure ou une valeur de l'objet de données courant.

6. Système selon la revendication 5, dans lequel l'historique d'application comporte des éléments indiquant des états d'application antérieurs et des objets de données antérieurs associés à des pages visitées précédemment.

7. Système selon l'une quelconque des revendications précédentes, dans lequel le client (101) est agencé pour afficher des indications de multiples prochaines pages prédites comportant la prochaine page prédite.

8. Système selon la revendication 7, dans lequel le client (101) est agencé pour afficher des indications des multiples prochaines pages prédites comportent des instructions pour indiquer des probabilités relatives des multiples prochaines pages prédites.

9. Système selon l'une quelconque des revendications précédentes, dans lequel le client (101) est agencé pour mettre à jour la page courante pour comporter un élément graphique indiquant la prochaine page prédite ou pour modifier un élément graphique de la page courante pour indiquer la prochaine page prédite.

10. Système selon la revendication 9, dans lequel l'élément graphique est une fenêtre incrustée comportant une icône correspondant à la prochaine page prédite, l'icône étant de préférence sélectionnable pour une transition vers la prochaine page prédite.

11. Système selon la revendication 9 ou la revendication 10, dans lequel la modification de l'élément graphique existant de la page courante comporte le changement d'au moins un parmi un placement, une forme, une taille ou une couleur de l'élément graphique existant ; ou le changement d'au moins un parmi un placement, une police, une taille, une mise en évidence ou une couleur d'un texte associé à l'élément graphique existant.

12. Méthode pour la navigation dans une application utilisant des réseaux neuronaux comprenant les étapes de méthode exécutées par le système selon l'une quelconque des revendications 1 à 11.

13. Produit programme d'ordinateur comprenant des instructions de code de programme stockées sur un support lisible par ordinateur pour mettre en œuvre les étapes de méthode selon la revendication 12 lorsque ledit programme est exécuté sur un ordinateur.
